# EUROPEAN PATENT SPECIFICATION

(11) **EP 1 622 408 B1**
(45) Date of publication and mention of the grant of the patent: **19.11.2008**
(21) Application number: 05016428.4
(22) Date of filing: 28.07.2005
(51) Int. Cl.: H04Q 7/28

(54) **Talk burst allocation in group communication system supporting ptt service**
Zuweisung von Sprechbursts in einem den PTT Dienst unterstützenden Gruppenkommunikationssystem
Allocation de rafales de conversation dans un système de communication de groupe supportant le service PTT

(30) Priority: 28.07.2004 US 591602 P; 29.12.2004 KR 2004115566
(43) Date of publication of application: 01.02.2006
(73) Proprietor: LG ELECTRONICS INC., Seoul (KR)
(72) Inventor: Lim, Guk-Chan, Uiwang Gyeonggi-Do (KR)
(74) Representative: Katérle, Axel

(56) References cited:
- EP-A- 0 778 680
- US-A- 2002 119 792
- US-A1- 2002 172 169
- US-A1- 2003 012 149
- US-B1- 6 295 284
- "PUSH-TO-TALK OVER CELLULAR (POC) USER PLANE; TRANSPORT PROTOCOLS; POC RELEASE 1.0;" TRANSPORT PROTOCOLS V1.1.0, August 2003 (2003-08), page COMPLETE, XP000863836

## Description

### BACKGROUND OF THE INVENTION

### 1. Field of the Invention

The present invention relates to a PTT (Push-To-Talk) service, and particularly, to a talk burst allocation method in a group communication system supporting a PTT service.

### 2. Background of the Related Art

PTT (Push-To-Talk) is a service for supporting instantaneous communications between two users, such as a walkie-talkie service, by which communication can be performed in a one-to-one or one-to-group (one-to-many) manner when the user presses a PTT key of a PTT terminal.

In general, a PTT service system includes a PTT terminal that supports a PTT service, and a PTT server for controlling the communication of voice and data between PTT terminals and controlling the "right to talk" (or right to speak) procedures for each PTT terminal. In other words, a user that has been granted the right to talk is said to have been granted the "floor" or granted a "talk burst", and these expressions can thus be used interchangeably.

Here, a right to talk (or talk burst) procedure refers to allocating qualifications for transmitting data in half-duplex communications, such as a PTT service, and is used for preventing conditions in which more than two users transmit data and collisions therebetween occur. Namely, talk burst requests (or floor requests) from various users are granted or denied by the PTT server such that only one user (PTT terminal) at a time has the right to talk while other users must listen.

In the related art PTT service system, when a user who wishes to obtain a right to talk presses a key of the PTT terminal to request the right to talk, if the right to talk has not been allocated to another PTT terminal, the PTT server transmits a talk burst grant message (floor grant message) to the corresponding PTT terminal of that user. However, if another PTT terminal already has the right to talk allocated thereto, the PTT server transmits a talk burst deny message (floor deny message) to the corresponding PTT terminal of that user.

The PTT terminal having received the talk burst grant message from the PTT server is allowed to transmit voice and data inputted by the user to one or more other PTT terminals via the PTT server. The PTT terminal having received the talk burst deny message from the PTT server outputs an error message in order to notify the user that the talk burst has been denied.

The user having confirmed the error message should then again request a right to talk by pressing the key of the PTT terminal after the right to talk of another user is released.

Thus, in the related art talk burst allocation method in the PTT service system, a user who wishes to obtain the right to talk, requests a talk burst by pressing the key of the PTT terminal. When another user already has the right to talk, the user must wait until the another user releases his right to talk, and thereafter can request a right to talk once again by pressing the key of the PTT terminal.

In the related art talk burst allocation method in the PTT service system, when a user who has data to be transmitted requests a right to talk, the user may not obtain such right to talk because another user already has the right to talk. In addition, when the user does not press the PTT key at the appropriate time (namely, after another user release his right to talk), the user may lose his right to talk to other users who may press the PTT key on their PTT terminal more quickly than that user.

Furthermore, in the related art talk burst allocation method in the PTT service system, even if the user has data which should be transmitted with priority, because the user loses his right to talk to other users or because another user already has the right to talk, voice and data may not be transmitted as quickly as desired.

Group communication systems supporting the PTT service and corresponding talk burst allocation methods are described in US 2003/0012149 A1 and US 6 295 284 B1.

### BRIEF DESCRIPTION OF THE INVENTION

The present inventor recognized some drawbacks of the related art. Namely, the related art does not adequately facilitate multiple users taking the floor when each user wishes to speak to other users employing a group (point-to-multipoint) communication system, such as a half-duplex communication system like Push-To-Talk (PTT). Preferably, when more than one user wishes to take the floor and each sends a transmission request (e.g., a floor request, a talk burst request, etc.) to obtain a right to talk (i.e., a transmission privilege), priorities should be allocated to the users such that they take turns in speaking (i.e., "taking the floor") according to their allocated priorities and by considering whether their transmission requests were granted or denied. Also, in the related art, a user's floor request is only transmitted to the server each time the PTT button is pressed by the user. Thus, if another user already has the privilege of transmission (i.e., the right to talk), the current user must re-press his PTT button in order to re-send his floor request, and this may need to be repeated until the another user is finished (i.e., until the floor is released). Accordingly, the present inventor has provided a solution to these drawbacks explained above.

The present invention provides a user terminal according to the features of claim 1.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a flow chart showing sequential steps in a first embodiment for a talk burst allocation method according to the present invention;
Figure 2 is a flow chart showing sequential steps in a second embodiment of the talk burst allocation method according to the present invention; and
Figure 3 depicts a group communication system showing a server and a single user terminal according to the present invention, although many user terminals may be employed.

### DETAILED DESCRIPTION OF THE INVENTION

Hereafter, some preferred embodiments of the present invention will be explained in detail by referring to the accompanying drawings. In the following description, some well-known functions or constructions are not described in detail because doing so may obscure the invention in unnecessary detail. Several exemplary embodiments of the present invention that may be used separately or in any combination to achieve talk burst allocation will be described in more detail hereafter.

Push-To-Talk, commonly abbreviated as PTT, is a method of conversing on half-duplex communication lines by pushing a button to allow voice communication to be transmitted and releasing the button to allow voice communication to be received. Such PTT features are being implemented in recent mobile terminals (e.g., mobile phones, handsets, wireless devices, etc.), allowing a mobile terminal to function as a digital two-way radio (e.g., a walkie-talkie) in push-to-talk operation. One person at a time can talk by pressing a PTT button and one or several others can listen instantly. Certain PTT schemes are based on 2.5G packet-switched networks (e.g., CDMA, GPRS, etc.) and use particular protocols, namely, SIP (Session Initiation Protocol) and RTP (Real Time Transport Protocol). These particular versions of PTT are called "Push-To-Talk over Cellular" (or Push-over-Cellular), commonly abbreviated as PoC.

As cellular communication networks continue to evolve and accommodate the transferring of various types of data (voice, images, audio, video, multimedia, etc.), various Internet access technologies are being employed. An example would be the Internet Protocol (IP), which is a data-oriented protocol used by source and destination hosts for communicating data across a packet-switched network (e.g., the Internet), and examples include IPv4, IPv6, and the like.

Among the numerous features of PTT (including a particular type of PTT called PoC), the floor control procedures related to a server (e.g., a PTT server) and a client (e.g., a PTT client) will be considered hereafter. In particular, the server can be considered as a centralized point that grants a "floor" to a PTT user who wishes to speak to a talk group. Namely, a user can "take the floor" and speak to other users who can only listen during that time. The client includes various mechanisms to facilitate the priority allocation required in granting the floor to the user.

When multiple users wish to take the floor (in order to talk with other users) by respectively sending a transmission request (e.g., a floor request, a talk burst request, etc.), priorities should be allocated such that the users take turns in speaking by considering whether their transmission requests that have been granted or denied. For example, the priorities may be allocated on a first come first served basis. For each transmission request from each client, the server may either grant or deny each request based upon the communications environment or other factors thereof.

In the present invention, talk burst allocation can also be referred to as obtaining the right to talk (or right to speak) or obtaining permission to transmit (access request). A user that is granted the right to talk is said to have been granted the "floor" or granted a "talk burst", and these expressions can be used interchangeably.

In a talk burst allocation method according to the present invention, when a certain user requests a right the talk (a talk burst), if another user has already has the right to talk (a talk burst) and thus the user's talk burst request can not be granted, the priority of a corresponding PTT terminal is increased (upgraded) on the basis of the length of time during which the user presses the PTT key, and the PTT terminal having the highest priority is given to right to talk. Here, if the user releases the pressed PTT key of the PTT terminal for which a talk burst request has been denied, the priority of the corresponding PTT terminal is initialized, for example, to a value of '0'.

In the PTT service system according to the present invention, if the talk burst request is denied such that the PTT terminal does not obtain the right to talk, the priority can be increased (upgraded) in the PTT server or in the corresponding PTT terminal itself.

The PTT service system according to the present invention includes a PTT terminal having a PTT key and a PTT server for confirming a priority for a talk burst request of the PTT terminal and allocating a right to talk for the PTT terminal having the highest priority. Here, the priority can be counted in the PTT server or in the PTT terminal itself.

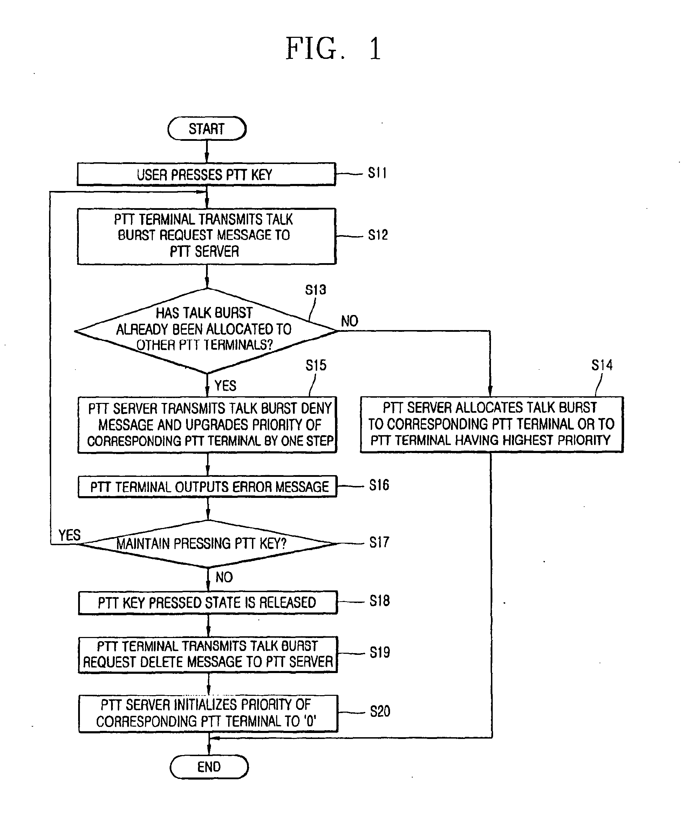

Figure 1 is a flow chart showing the sequential steps in a first embodiment for the talk burst allocation method in the PTT service system according to the present invention, in which a talk burst allocation method by which the PTT server counts the priorities is explained. Here, it can be understood that such counting procedure may be achieved through use of a timer or counter mechanism.

When a user presses the PTT key (S11), the PTT terminal recognizes the PTT key pressed state and transmits a talk burst request (floor request) message to the PTT server (S12).

A PTT server having received the talk burst request message confirms whether the talk burst has already been allocated to another user (S13). If the talk burst has not been allocated to any other user, the PTT server transmits a talk burst grant (floor grant) message to the corresponding PTT terminal of that user to thus allocate the talk burst to that PTT terminal (S14).

However, if it is confirmed that the talk burst has already been allocated to another user, the PTT server transmits a talk burst deny (floor deny) message to the corresponding PTT terminal to notify that the talk burst can not be allocated thereto, and the PTT server then increases (upgrades) a priority for the talk burst of the PTT terminal by one step (level) (S15). Namely, the priority level can be sequentially incremented to the next highest priority level. However, it can be understood that priority levels may be increased by multiple levels, if needed. For example, while the user continuously keeps the PTT key depressed, the current priority level may be increased in single step increments during the first 3 seconds, and thereafter, the current priority level may be increased by two or more step increments in order to increase the probability for that user to obtain a right to talk, as time passes.

The PTT terminal having received the talk burst deny message notifies the user that the talk burst has been denied (S16). This notification can be achieved through audible, visual or tactile means or any combination thereof, such as outputting an error message on a display screen of the PTT terminal. The user who confirms the error message determines whether to maintain or release the talk burst requested state (S17). Namely, the user can either cancel his requested right to talk by releasing the PTT button, or can maintain his requested right to talk by continuing to hold down the PTT button.

When the user continuously maintains the PTT key pressed state in order to maintain the talk burst requested state, the PTT terminal re-transmits the talk burst request message to the PTT server after a certain time passes (S12). Namely, while the PTT button remains pressed, the PTT terminal periodically re-transmits a talk burst request message.

Here, the time period of such re-transmitting can be varied accordingly, by for example, the PTT terminal itself or upon receiving instructions from the PTT server. Namely, the re-transmitting time period may be relatively short (e.g., 1 second) or relatively long (e.g., 3 seconds). A shorter period may be advantageous because it would allow the user to quickly obtain his right to talk, but the frequent re-transmitting of talk burst requests may result in undesirably high consumption of radio resources and battery power. A longer period may be advantageous by minimizing the use of radio resources and conserving battery power, but the user may experience delays in obtaining his right to talk.

A combination of short and long time periods may also be used during a single talk burst request duration (i.e., while the user continues to press the PTT key). For example, during the first 5 seconds while the user continues to hold down the PTT button, a talk burst message may be re-transmitted every 0.5 seconds (namely, ten re-transmissions made during five seconds), and if the user still continues to hold down the PTT button after those first 5 seconds, then a talk burst message may be re-transmitted every 2 seconds. Thus, re-transmissions may be performed relatively frequently at first, and less frequently as time passes. Accordingly, the re-transmissions can be varied as needed.

If another user has the talk burst, the PTT server increases (upgrades) the priority of the corresponding PTT terminal by one more step (S13 and S15). That is, while the user continues to press the PTT key, the PTT terminal periodically transmits the talk burst request message to the PTT server, and whenever the talk burst request is denied, the PTT server increases (upgrades) the priority of the corresponding PTT terminal by one step.

However, when the user having confirmed the talk burst deny message releases the PTT key pressed state to thus release the talk burst request (S18), the PTT terminal transmits a talk burst request delete message to the PTT server (S19), and the PTT server initializes the priority of the corresponding PTT terminal to '0' (S20). Namely, that PTT terminal is initialized to have a zero priority level.

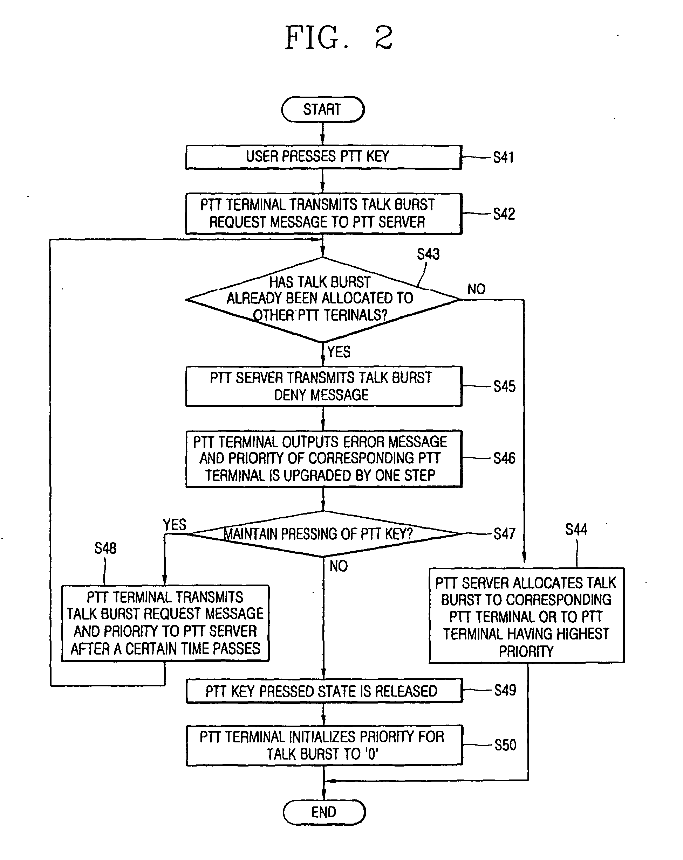

Figure 2 is a flow chart showing sequential steps in a second embodiment for a talk burst allocation method in a PTT service system according to the present invention, which is a talk burst allocation method with respect to a case that the PTT terminal counts its priority for the talk burst.

When the user requests a talk burst by pressing the PTT key (S41), the PTT terminal transmits a talk burst request message to the PTT server (S42).

The PTT server having received the talk burst request message confirms whether the talk burst has been allocated to another user (S43), and if the talk burst has not been already allocated, the PTT server transmits a talk burst grant message to the corresponding PTT terminal (S44). If the talk burst had been granted, the PTT server transmits a talk burst deny message to the corresponding PTT terminal (S45).

The PTT terminal having received the talk burst deny message outputs an error message to notify the user that the talk burst has been denied, and increases (upgrades) the priority for the talk burst by one step (S46).

The user having confirmed the error message determines whether to maintain or release the talk burst requested state (S47) so as to maintain or release the PTT key pressed state.

When the user keeps on pressing the PTT key in order to maintain the talk burst requested state, the PTT terminal transmits to the PTT server the talk burst request message together with the priority of the corresponding PTT terminal after a certain time passes (S49).

If the talk burst has been allocated to another PTT terminal, the PTT server having received the priority of the PTT terminal and the talk burst request message transmits the talk burst deny message to the corresponding PTT terminal (S43 and S45). The PTT terminal having received the talk burst deny message outputs the error message and simultaneously increases (upgrades) its priority for the talk burst by one more step (S46). However, if the talk burst has not been allocated to the another PTT terminal, the PTT server allocates the talk burst to the PTT terminal (S44).

That is, while the user keeps on pressing the PTT key, the PTT terminal periodically transmits the talk burst request message and the priority to the PTT server. Whenever the talk burst request is denied by the PTT server, the PTT terminal increases (upgrades) its priority for the talk burst by one step.

However, if the user having confirmed the talk burst deny message releases the PTT key pressed state in order to release the talk burst request (S49), the priority stored in the PTT terminal itself is initialized to '0' and a talk burst request message is not transmitted any more (S50).

In the PTT service system according to the present invention, because the PTT server primarily (firstly) allocates the talk burst to the PTT terminal having a high priority, the user having urgent data to be transmitted, can maintain the PTT key in a pressed state to thusly increase (upgrade) his priority for obtaining a talk burst.

As described thus far, in the talk burst allocation method in the PTT service system according to the present invention, since the priority for the talk burst of the PTT terminal is increased (upgraded) in a manner relative to the time during which the user presses the PTT key, and the talk burst is allocated according to the priority, the user can quickly obtain a talk burst even if the talk burst has already been allocated to another user or if the user does not press the PTT key in an appropriate timing to thereby lose his/her talk burst to other users.

Therefore, an object of the present invention is to provide a talk burst allocation method in a PTT (Push To Talk) service system for providing a priority according to a time for maintaining a state that a user presses a PTT key and allocating a talk burst according to the priority.

To achieve these and other advantages and in accordance with the purpose of the present invention, as embodied and broadly described herein, there is provided a talk burst allocation method in a PTT service system comprising one or more PTT terminals and a PTT server for controlling a talk burst of each PTT terminal, by which the PTT server allocates the talk burst to the PTT terminal having a high priority with respect to the talk burst.

According to another embodiment of the present invention, a talk burst allocation method in a PTT service system comprises: if a PTT server receives a talk burst request message from a specific PTT terminal, judging whether the talk burst is to be allocated to the corresponding PTT terminal; when it is judged that the talk burst is not to be allocated to the corresponding PTT terminal, upgrading a priority for the talk burst of the PTT terminal by one step by the PTT server, and transmitting a talk burst deny message from the PTT server to the PTT terminal; monitoring a PTT key pressed state by the PTT terminal having received the talk burst deny message; and if the PTT key keeps on being pressed for a certain time, retransmitting the talk burst request message from the PTT terminal to the PTT server.

According to still another embodiment of the present invention, a talk burst allocation method in a PTT service system comprises: if a PTT server receives a talk burst request message from one or more PTT terminals, judging whether a talk burst has already been allocated to another PTT terminal; if it is judged that the talk burst has not been allocated, confirming priorities of the PTT terminals; allocating the talk burst to the PTT terminal having the highest priority and upgrading priorities of the remaining PTT terminals by one step; and if the PTT server receives a talk burst request delete message from a specific PTT terminal, initializing the priority of the corresponding PTT terminal.

According to yet another embodiment of the present invention, a talk burst allocating method in a PTT service system comprises: if a PTT server receives a talk burst request message and a priority from a specific PTT terminal, judging whether the talk burst is to be allocated to the corresponding PTT terminal; if it is judged that the talk burst is not to be allocated thereto, transmitting a talk burst deny message from the PTT server to the PTT terminal; upgrading the priority for the talk burst and monitoring a PTT key pressed state by the PTT terminal having received the talk burst deny message; and if the PTT key keeps on being pressed for a certain time, retransmitting the talk burst request message and the priority of the corresponding PTT terminal from the PTT terminal to the PTT server.

The present invention can be embodied as software, hardware, or a combination of both. For example, talk burst allocation method according to the present invention can be embodied as codes or commands in a software program that can be stored in a storage media (such as an internal memory of the user terminal, a flash memory, etc.) and that can be executed by a processor (such as a microprocessor within the user terminal).

The present invention provides a method of handling multiple users in a group communication system, comprising: detecting a time duration during which a user continuously activates a half-duplex function; assigning a priority to said user according to the detected time duration; and granting a transmission privilege to said user according to the assigned priority.

Here, the half-duplex function can be a push-to-talk function, and the assigned priority can be increased as the detected time duration increases. Also, the transmission privilege can provide the user with a right to talk to other users, and the transmission privilege can be granted upon receiving one or more transmission requests that are sent to a server during the detected time duration. The transmission requests can be right to talk requests, floor requests, or talk burst requests, and transmission requests can be re-sent to the server in a periodic manner.

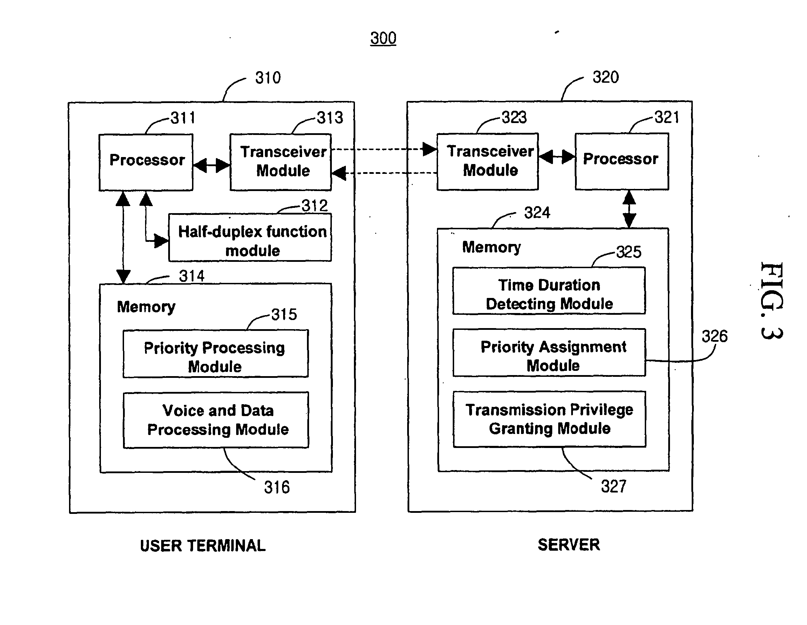

Referring to Figure 3, the present invention provides a server (320) of a group communication system (300) supporting half-duplex communications, the server (320) comprising: a transceiver (323) to send and receive communication signals; a processor (321) cooperating with the transceiver; and a storage medium (324) containing instructions (325, 326, 327) executable by the processor to perform the steps of, detecting a time duration during which a user continuously activates a half-duplex function, assigning a priority to said user according to the detected time duration, and granting a transmission privilege to said user according to the assigned priority.

Also, referring to Figure 3, the present invention provides a user terminal (310) of a group communication system (300) supporting half-duplex communications, the user terminal (310) comprising: a transceiver (313) to send and receive communication signals; a half-duplex function module (312) that is activated to allow voice and data to be transmitted and de-activated to allow voice and data to be received; a processor (311) cooperating with the transceiver and the half-duplex function module; and a storage medium (314) containing instructions (315, 316) executable by the processor to perform the steps of, activating a half-duplex function upon selection by the user, sending one or more requests to a server to obtain a right to talk, based upon a time duration detected by the server during which the user continuously activates the half-duplex function and based upon a priority assigned by the server according to the detected time duration, and transmitting data to the other users upon being granted a transmission privilege by the server.

The features of the present invention are applicable to group (point-to-multipoint) communications, such as half-duplex communications like PTT (and PoC, which is a type of PTT), that allow voice and data communication to be transmitted upon activating a feature (e.g., by pushing a button, upon selecting a soft key, etc.) and allow voice and data communication to be received upon de-activating the feature (e.g., releasing the button, de-selecting the soft key, etc.).

Additionally, it can be clearly understood that the teachings and suggestions of the present invention can also be applicable and are intended to be applied to the so-called "Push-To-x" (PTx) techniques, because PTx is an enhancement of PTT and PoC technologies. Here, PTx refers to an enhanced version of PTT capable of supporting not only voice communications, but also various types of multimedia applications (e.g., photos, ringtones, games, content, SMS, MMS, etc.). An example of PTx is the so-called "Push-To View" (PTV) technology that can allow users to engage in multi-user video conferencing. PTx is expected to change the way we communicate when using mobile or wireless devices. The so-called "push-to" interface can be the main tool for connecting multiple users. Namely, the user's contact list (e.g., a so-called "buddy list") can be the center and starting point for the user's communication experience. By selecting a "push-to-x" function, the user will be able to launch various types of applications and communication sessions, including PTT, video conferencing, sending photos, and not to mention, placing ordinary phone calls. Each user's state of presence ("presence") will be an important component for the user to interface with his contact list. Namely, when the user activates the PTx function, a contact list containing various persons ("buddies") may be displayed with a list of options for each contact person based on their state of presence, capabilities of their mobile terminal or device, interoperability of their network, and the like. Here, the user may interface with his mobile terminal or wireless device through audible, visual, and/or tactile alerts or notifications.

Regarding the terminology used herein, it should be noted that PTT is also referred to as "P2T," and PTx is also referred to as "P2x," and PTV is also referred to as "P2V". Other similar abbreviations or acronyms may also be used to refer to the same basic concepts regarding various "push-to" techniques currently under development and to be newly developed in the near future.

As the present invention may involve communications through Internet access (e.g., VoIP), the features of the present invention are also intended to be applicable to enhanced Internet access services, such as the so-called "Broadband convergence Network (BcN)," which is expected to provide Internet access service with speeds of 50~100Mbps, roughly 50 times faster than conventional broadband services.

As the present invention may be embodied in several forms without departing from essential characteristics thereof, it should also be understood that the above-described embodiments are not limited by any of the details of the foregoing description, unless otherwise specified, but rather should be construed within the scope as defined in the appended claims.

## Claims

1. A user terminal (310) for a group communication system (300) supporting half-duplex communications, the user terminal (310) comprising:
a transceiver (313) to send and receive communication signals;
a half-duplex function module (312) that is activated to allow voice and data to be transmitted and de-activated to allow voice and data to be received;
a processor (311) cooperating with the transceiver (313) and the half-duplex function module (312); and
a storage medium (314) having instructions,
**characterized in that** the processor (311) is adapted to execute the instructions to allow the user terminal (310) to perform the steps of:
increasing a priority by counting a time duration during which a push-to-talk key pressed state of the user terminal (310) is maintained; and
sending a request to obtain a communication privilege and priority information to a server (320), for a plurality of times while the push-to-talk key remains in the pressed state;
wherein the server (320), if the push-to-talk key pressed state is released, initializes the priority for a talk burst of the user terminal (310).

2. The user terminal of claim 1, wherein the processor (311) is adapted to execute the instructions to allow the user terminal (310) to retransmit the request in shorter time periods of variable lengths.

3. The user terminal of claim 1, wherein the user terminal (310) further comprises a counter for increasing the priority level by two or more according to a time duration during which the key remains in the pressed state.

4. The user terminal of any one of the preceding claims, wherein the processor (311) is adapted to execute the instructions to allow the user terminal (310) to notify through audible, visual, and/or tactile alerts or notifications when a deny message is received from the server (320), the deny message informing that the request for communication privilege has been denied.

5. The user terminal of claim 1, wherein the processor (311) is adapted to execute the instructions to allow the user terminal (310) to transmit a request delete message to the server (320) when the user releases the key pressed state.

6. The user terminal of any one of the preceding claims, wherein the processor (311) is adapted to execute the instructions to allow the user terminal (310) to initialize the counter for increasing the priority according to a time duration during which the key remains in the pressed state when the user releases the key pressed state.

7. The user terminal of any one of the preceding claims, wherein the terminal is a push-to-talk terminal.

8. The user terminal of claim 7, wherein the terminal is a push-to-talk-over-cellular terminal.

## Patentansprüche

1. Benutzerendeinrichtung (310) für ein Gruppenkommunikationssystem (300), das Halbduplex-Kommunikationen unterstützt, wobei die Benutzerendeinrichtung (310)
einen Transceiver (313) zum Senden und Empfangen von Kommunikationssignalen,
ein Halbduplex-Funktionsmodul (312), das aktiviert wird, um eine Übertragung von Sprache und Daten zu ermöglichen, und das deaktiviert wird, um ein Empfangen von Sprache und Daten zu ermöglichen,
einen Prozessor (311), der mit dem Transceiver (313) und dem Halbduplex-Funktionsmodul (312) zusammenarbeitet, und
ein Speichermedium (314) umfasst, das Befehle aufweist,
**dadurch gekennzeichnet, dass**
der Prozessor (311) dazu eingerichtet ist, die Befehle auszuführen, um es der Benutzerendeinrichtung (310) zu ermöglichen, die Schritte auszuführen:
Erhöhen einer Priorität durch Zählen einer Zeitdauer, während der ein gedrückter Zustand einer Push-to-Talk-Taste der Benutzerendeinrichtung (310) gehalten wird; und
mehrmaliges Senden einer Anfrage an einen Server (320), um ein Kommunikationsvorrecht und Prioritätsinformationen zu erhalten, während die Push-to-Talk-Taste in dem gedrückten Zustand verbleibt;
wobei der Server (320), wenn der gedrückte Zustand der Push-to-Talk-Taste freigegeben wird, die Priorität für einen Sprechburst der Benutzerendeinrichtung (310) initialisiert.

2. Benutzerendeinrichtung nach Anspruch 1, wobei der Prozessor (311) dazu eingerichtet ist, die Befehle auszuführen, um es der Benutzerendeinrichtung (310) zu ermöglichen, die Anfrage in kürzeren Zeiträumen variabler Länge erneut zu übertragen.

3. Benutzerendeinrichtung nach Anspruch 1, wobei die Benutzerendeinrichtung (310) ferner einen Zähler zum Erhöhen des Prioritätsgrades um zwei oder mehr gemäß einer Zeitdauer umfasst, während der die Taste in dem gedrückten Zustand verbleibt.

4. Benutzerendeinrichtung nach einem der vorhergehenden Ansprüche, wobei der Prozessor (311) dazu eingerichtet ist, die Befehle auszuführen, um es der Benutzerendeinrichtung (310) zu ermöglichen, durch hörbare, visuelle und/oder fühlbare Alarme oder Benachrichtigungen Nachricht zu geben, wenn eine Verweigerungsnachricht von dem Server (320) empfangen wird, wobei die Verweigerungsnachricht darüber informiert, dass die Anfrage nach einem Kommunikationsvorrecht verweigert worden ist.

5. Benutzerendeinrichtung nach Anspruch 1, wobei der Prozessor (311) dazu eingerichtet ist, die Befehle auszuführen, um es der Benutzerendeinrichtung (310) zu ermöglichen, eine Anfragelöschungsnachricht an den Server (320) zu übertragen, wenn der Benutzer den gedrückten Zustand der Taste freigibt.

6. Benutzerendeinrichtung nach einem der vorhergehenden Ansprüche, wobei der Prozessor (311) dazu eingerichtet ist, die Befehle auszuführen, um es der Benutzerendeinrichtung (310) zu ermöglichen, den Zähler zum Erhöhen der Priorität gemäß einer Zeitdauer zu initialisieren, während der die Taste in dem gedrückten Zustand verbleibt, wenn der Benutzer den gedrückten Zustand der Taste freigibt.

7. Benutzerendeinrichtung nach einem der vorhergehenden Ansprüche, wobei die Endeinrichtung eine Push-to-Talk-Endeinrichtung ist.

8. Benutzerendeinrichtung nach Anspruch 7, wobei die Endeinrichtung eine Push-to-Talk-Mobilfunkendeinrichtung ist.

## Revendications

1. Terminal d'utilisateur (310) pour un système de communication de groupe (300) supportant des communications semi-duplex, le terminal d'utilisateur (310) comprenant :
un émetteur-récepteur (313) pour envoyer et recevoir des signaux de communication ;
un module de fonction semi-duplex (312) qui est activé pour permettre que la voix et des données soient transmises et désactivé pour permettre que la voix et des données soient reçues ;
un processeur (311) coopérant avec l'émetteur-récepteur (313) et le module de fonction semi-duplex (312) ; et
un support de stockage (314) comportant des instructions,
**caractérisé en ce que** le processeur (311) est adapté pour exécuter les instructions pour permettre au terminal d'utilisateur (310) d'exécuter les étapes consistant à :
augmenter une priorité en comptant une durée pendant laquelle un état enfoncé d'une touche de messagerie vocale instantanée du terminal d'utilisateur (310) est maintenu ; et
envoyer une demande pour obtenir des informations sur un privilège et une priorité de communication à un serveur (320), une pluralité de fois tant que la touche de messagerie vocale instantanée reste à l'état enfoncé ;
dans lequel le serveur (320), si l'état enfoncé de la touche de messagerie vocale instantanée est libéré, initialise la priorité pour une rafale vocale du terminal d'utilisateur (310).

2. Terminal d'utilisateur selon la revendication 1, dans lequel le processeur (311) est adapté pour exécuter les instructions pour permettre au terminal d'utilisateur (310) de retransmettre la demande dans des périodes temporelles plus courtes de longueurs variables.

3. Terminal d'utilisateur selon la revendication 1, dans lequel le terminal d'utilisateur (310) comprend en outre un compteur pour augmenter le niveau de priorité de deux ou plus en fonction d'une durée pendant laquelle la touche reste à l'état enfoncé.

4. Terminal d'utilisateur selon l'une quelconque des revendications précédentes, dans lequel le processeur (311) est adapté pour exécuter les instructions pour permettre au terminal d'utilisateur (310) de notifier par l'intermédiaire d'alertes ou de notifications sonores, visuelles, et/ou tactiles lorsqu'un message de refus est reçu en provenance du serveur (320), le message de refus informant que la demande de privilège de communication a été refusée.

5. Terminal d'utilisateur selon la revendication 1, dans lequel le processeur (311) est adapté pour exécuter les instructions pour permettre au terminal d'utilisateur (310) de transmettre un message de suppression de demande au serveur (320) lorsque l'utilisateur libère l'état enfoncé de la touche.

6. Terminal d'utilisateur selon l'une quelconque des revendications précédentes, dans lequel le processeur (311) est adapté pour exécuter les instructions pour permettre au terminal d'utilisateur (310) d'initialiser le compteur pour augmenter la priorité en fonction d'une durée pendant laquelle la touche reste à l'état enfoncé lorsque l'utilisateur libère l'état enfoncé de la touche.

7. Terminal d'utilisateur selon l'une quelconque des revendications précédentes, dans lequel le terminal est un terminal de messagerie vocale instantanée.

8. Terminal d'utilisateur selon la revendication 7, dans lequel le terminal est un terminal de messagerie vocale instantanée sur cellulaire.
